# EUROPEAN PATENT APPLICATION

(11) **EP 2 261 848 A1**
(43) Date of publication of application: **15.12.2010**
(21) Application number: 10176337.3
(22) Date of filing: 08.10.2009
(51) Int. Cl.: G06Q 10/00, G06Q 50/00, G02B 27/22, H04N 13/00

(54) **Electronic menu apparatus**

(30) Priority: 10.10.2008 JP 2008264435; 18.02.2009 JP 2009035189
(62) Divisional of application: 09172500.2
(71) Applicant: Toshiba TEC Kabushiki Kaisha, Tokyo 141-8664 (JP)
(72) Inventor: Narahashi, Masaki, Shinagawa-ku Tokyo 141-8664 (JP); Hirama, Mika, Shinagawa-ku Tokyo 141-8664 (JP); Miyazaki, Sou, Shinagawa-ku Tokyo 141-8664 (JP); Tsujimoto, Shuichi, Shinagawa-ku Tokyo 141-8664 (JP); Watanabe, Naoki, Shinagawa-ku Tokyo 141-8664 (JP)
(74) Representative: Gendron, Vincent Christian

(57) **Abstract**

An electronic menu apparatus includes (1), a display (17) provided with a function of displaying a three-dimensional image to be stereoscopically viewable, a menu data storage section (28) configured to store, for each of items included in a menu, menu data, a list display control section (107) which displays a list of the items on the display, a selection receiving section (101) which receives a selection input of any one item from among the respective items displayed on the list, and an image display control section (108) which displays, on the basis of image data included in menu data of one item a selection input of which has been received by the selection receiving section (101), the menu data of one item being among the menu data of the respective items stored in the menu data storage section (2B), a three-dimensional image of the one item the selection input of which has been received, on the display (17).

## Description

The present invention relates to an electronic menu apparatus intended for restaurants.

Jpn. Pat. Appln. KOKAI Publication No. 2008-112356 discloses an electronic menu apparatus which displays a list of images indicating items of a menu on a display provided with a touch panel and, when any one of the images is touch-input, designates the item corresponding to the input image as an item selected by a customer.

Jpn. Pat. Appln. KOKAI Publication No. 2001-175954 discloses an electronic menu apparatus configured to, when a customer stratum is specified, enlarge images of items enjoying high popularity in the customer stratum larger than the other items in such a manner that the images are more conspicuous than the other items.

As described above, an electronic menu apparatus capable of varying the size of an image indicating an item is already known. However, the conventional electronic menu apparatus displays an image of an item by a two-dimensional image. The two-dimensional image is flat, and hence it is difficult for a customer to appreciate the nature of the volume of the food and drink. When the quantity of the served food and drink is less than the quantity visualized from an image displayed on the electronic menu apparatus, a complaint is made by the customer in some cases.

The present invention has been contrived on the basis of these circumstances, and an object thereof is to provide an electronic menu apparatus capable of accurately conveying the nature of the volume of the food and drink to be served at a restaurant to the customer, and enhancing the level of customer satisfaction.

According to one aspect of the present invention, an electronic menu apparatus includes, an electronic menu apparatus comprising, a display provided with a function of displaying a three-dimensional image to be stereoscopically viewable, a menu data storage section which stores, for each of items included in a menu, menu data including both item specifying data capable of recognizing the item, and image data representing the three-dimensional image of the item, a list display control section which displays a list of the items on the display on the basis of item specifying data included in the menu data of each item stored in the menu data storage section, a selection receiving section which receives a selection input of any one item from among the respective items displayed on the list, and an image display control section which displays, on the basis of image data included in menu data of one item a selection input of which has been received by the selection receiving section, the menu data of one item being among the menu data of the respective items stored in the menu data storage section, a three-dimensional image of the one item the selection input of which has been received, on the display.

The invention can be more fully understood from the following detailed description when taken in conjunction with the accompanying drawings, in which:
FIG. 1 is an overall configuration view of an electronic menu system which is an embodiment of the present invention.
FIG. 2 is a data format of a record to be stored in a category database managed by a database server of the electronic menu system.
FIG. 3 is a data format of a record to be stored in an item database managed by the database server.
FIG. 4 is a data format of a record to be stored in an image database managed by the database server.
FIG. 5 is a data format of a record to be stored in a screen database managed by the database server.
FIG. 6 is a block diagram showing the configuration of an electronic menu terminal of the electronic menu system.
FIG. 7 is a schematic view showing an example of attachment of a display panel provided to the electronic menu terminal to a restaurant table.
FIG. 8 is a schematic view showing the transition of main screens displayed on the display panel.
FIG. 9 is one layout example of a category screen displayed on the display panel.
FIG. 10 is one layout example of an item overview screen displayed on the display panel.
FIG. 11 is one layout example of an item detail screen displayed on the display panel.
FIG. 12 is one layout example of a set item detail screen displayed on the display panel.
FIG. 13 is one layout example of an order confirmation screen displayed on the display panel.
FIG. 14 is one layout example of an order completion screen displayed on the display panel.
FIG. 15 is a flowchart showing a main information processing procedure to be executed by a CPU of the electronic menu terminal.
FIG. 16 is a flowchart specifically showing the procedure of the category selection processing in FIG. 15.
FIG. 17 is a flowchart specifically showing the procedure of the detail screen display processing in FIG. 16.
FIG. 18 is a flowchart specifically showing the procedure of the set image display processing in FIG. 17.
FIG. 19 is a flowchart specifically showing the processing procedure of the order confirmation screen display processing in FIG. 17 or 18.
FIG. 20 is a plan view showing one specific example of an item overview screen.
FIG. 21 is a plan view showing one specific example of an item detail screen.
FIG. 22 is a plan view showing one specific example of a set item detail screen.
FIG. 23 is a schematic view showing the transition of main screens displayed on a display panel of an electronic menu terminal in a second embodiment of the present invention.
FIG. 24 is one layout example of an item overview screen displayed on the display panel of the electronic menu terminal in the second embodiment.
FIG. 25 is one layout example of an item selection screen displayed on the display panel of the electronic menu terminal in the second embodiment.
FIG. 26 is a schematic view showing the configuration of main functions possessed by a CPU of the electronic menu terminal in the second embodiment.
FIG. 27 is a flowchart specifically showing the procedure of category selection processing to be executed by the CPU of the electronic menu terminal in the second embodiment.
FIG. 28 is a flowchart specifically showing the procedure of the item selection screen display processing in FIG. 27.

### (First embodiment)

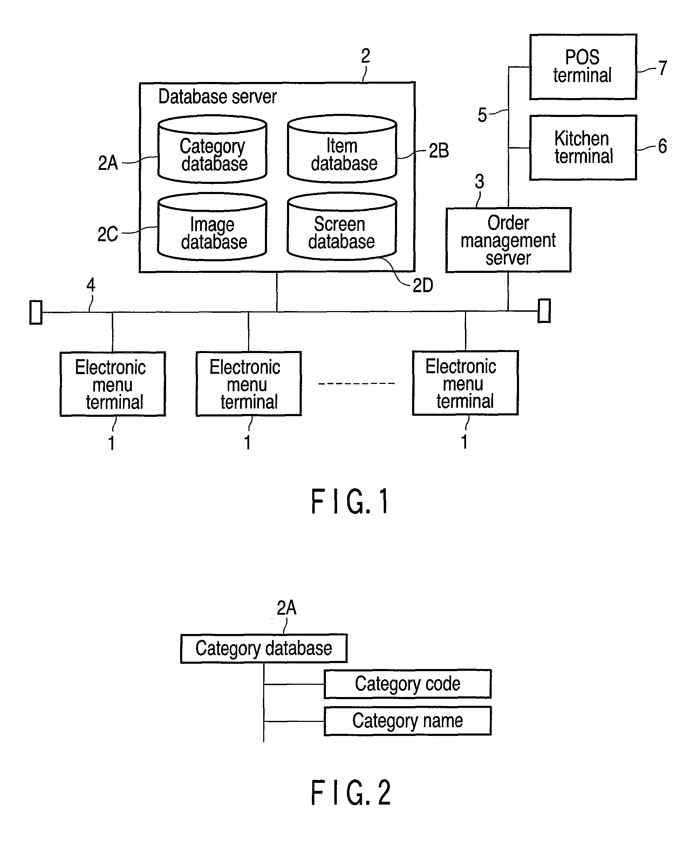

First, a first embodiment according to the present invention will be described below with reference to FIGS. 1 to 22. This embodiment is of a case where the present invention is applied to an electronic menu terminal of an electronic menu system to be constructed in a restaurant.

FIG. 1 is an overall configuration view of the electronic menu system. The electronic menu system is constituted of a plurality of electronic menu terminals 1, a database server 2, and order management server 3. Each of the electronic menu terminals 1 is connected to the database server 2 and order management server 3 through a local area network (LAN) 4.

The order management server 3 is a computer apparatus specialized in management of ordered data of customers. The order management server 3 connects a kitchen terminal 6 and point-of-sales (POS) terminal 7 to each other through a dedicated line. The kitchen terminal 6 creates data of cooking instruction to the kitchen on the basis of order data items of the customers, and displays the instruction data or produces printed output thereof. The POS terminal 7 calculates the price from the order data of a customer requesting the bill, and processes the payment data for the price to issue a receipt.

It should be noted that the line connecting the order management server 3, kitchen terminal 6, and POS terminal 7 to each other is not limited to the dedicated line 5. For example, the kitchen terminal 6 and POS terminal 7 may be connected to the LAN 4, and may transmit/receive data to/from the order management server 3 through the LAN 4.

The database server 2 is a computer apparatus specialized in management of various databases such as a category database 2A, item database 2B, image database 2C, screen database 2D, and the like.

The category database 2A stores therein information on categories into which respective items of the menu are classified. FIG. 2 is a data format of a record to be stored in the category database 2A. The category database 2A stores therein records each including a category code and category name, the records being of a number corresponding to the number of categories. The category name is a name expressing a category such as hamburgers, pasta, curry, drink, dessert or the like. The category code is a proper code assigned to each category to recognize each category.

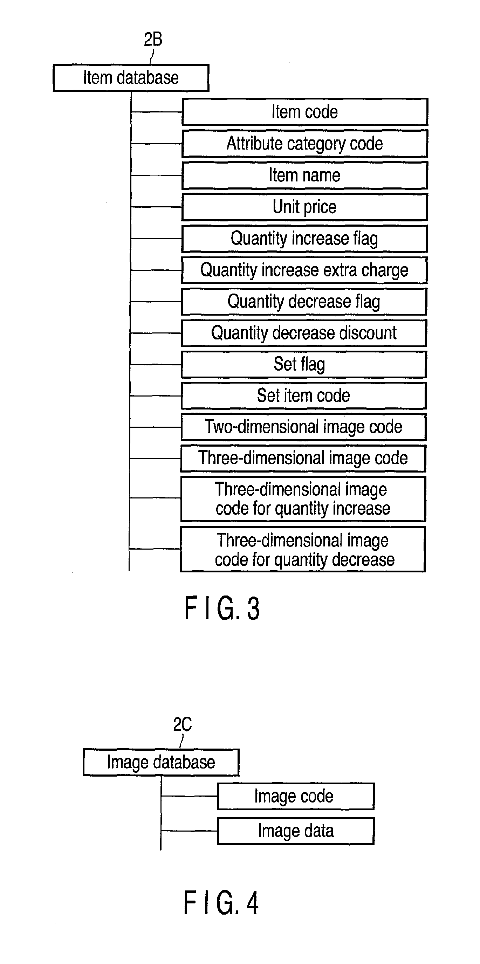

In the item database 2B, information associated with each item of the menu is stored. FIG. 3 is a data format of the record to be stored in the item database 2B. The item database 2B stores therein the records each including an item code, attribute category code, item name, unit price, quantity increase flag, quantity increase extra charge, quantity decrease flag, quantity decrease discount, set flag, set item code, two-dimensional image code, three-dimensional image code, quantity increase three-dimensional image code, and quantity decrease three-dimensional image code for quantity decrease, in the number corresponding to the number of items.

The item code is a proper code assigned to each item to recognize each item of the menu. The attribute category code is a category code of a category to which an item belongs. The comment is text data used to explain the contents of the item. The quantity increase flag is data declaring whether or not the quantity of the item can be increased. The quantity increase extra charge is an amount to be added to the unit price when the quantity of the item is increased. The quantity decrease flag is data declaring whether or not the quantity of the item can be decreased. The quantity decrease discount is an amount to be subtracted from the unit price when the quantity of the item is decreased.

The set flag is data indicating whether or not a set menu including an item of interest is set. The set item code is an item code assigned to the set menu including an item of interest. The record including the item code of the set menu is also stored in the item database 2B.

The two-dimensional image code is a code used to recognize the two-dimensional image data of the item. The three-dimensional image code is a code used to recognize the three-dimensional image data of the item. The quantity increase three-dimensional image code is a code used to recognize the quantity increase three-dimensional image data of the item. The quantity decrease three-dimensional image code is a code used to recognize the quantity decrease three-dimensional image data of the item.

Three-dimensional image data is output to a stereoscopic display 17 to be described later, whereby an object to be displayed is displayed on the display surface of the display as a three-dimensional image with a three-dimensional expanse. At this time, various parameters are set in such a manner that the size of the three-dimensional image in the two-dimensional direction becomes a size substantially identical to the size of the actual item which is the object to be displayed. Further, the various parameters are set in such a manner that the size of the three-dimensional image in the height direction also gets as close as possible to the size of the actual item.

As for data of the three-dimensional image for quantity increase, the three-dimensional image obtained when the quantity of the item has been increased is displayed on the display surface of the stereoscopic display 17. As for data of the three-dimensional image for quantity decrease, the three-dimensional image obtained when the quantity of the item has been decreased is displayed on the display surface of the stereoscopic display 17.

The image database 2C stores therein various image data. FIG. 4 is a data format of a record to be stored in the image database 2C. The image database 2C stores therein records each including an image code and image data, the records being of a number corresponding to the number of image data items. The image data includes two-dimensional image data, three-dimensional image data, quantity increase three-dimensional image data, quantity decrease three-dimensional image data, and the like. The image code is a proper code assigned to the image data in order to recognize the corresponding image data.

Each of the item code and item name is item identification data for enabling recognition of an item. Here, each of the item database 2B and image database 2C functions as a menu data storage section for storing therein menu data including item identification data for enabling recognition of an item, and image data representing the three-dimensional image of the item. It should be noted in the item database 2B, image data may be stored in place of the image code. As a result of this, the menu data storage section is realized by the item database 2B alone.

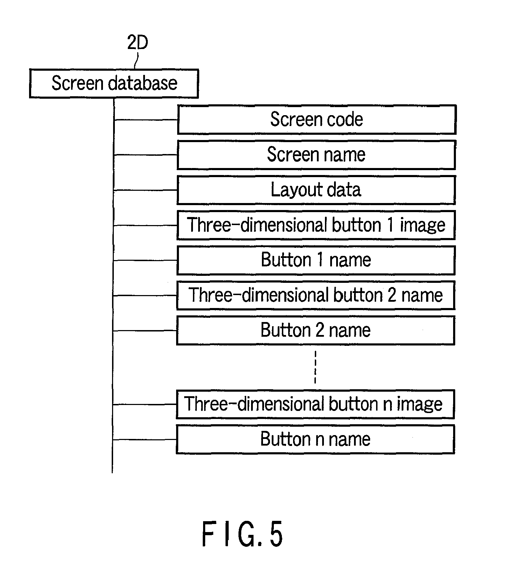

The screen database 2D stores therein various screen data. FIG. 5 is a data format of a record to be stored in the screen database 2D. The screen database 2D stores therein records each including a screen code, screen name, layout data, three-dimensional button image, and button name thereof, the records being of a number corresponding to the number of screen data items. The three-dimensional button image and button name form a pair, and a plurality of pairs are stored.

The screen code is a proper code assigned to each screen to recognize various screens displayed on a display panel of the electronic menu terminal 1. The screen name is a name set for the screen. The layout data is data indicating arrangement positions, sizes, colors, and the like of parts constituting the screen. The three-dimensional button image is image data of a stereoscopically viewable button part. The button name is a name to be displayed in the three-dimensional button image, the button name and three-dimensional button image forming a pair.

Next, the electronic menu terminal 1 will be described below. The electronic menu terminal 1 includes both a function of an electronic menu apparatus configured to electronically display an item list of a menu served to a customer in a restaurant, and function of an order input apparatus configured to convey information on an item selected from the menu and ordered by the customer to the order management server.

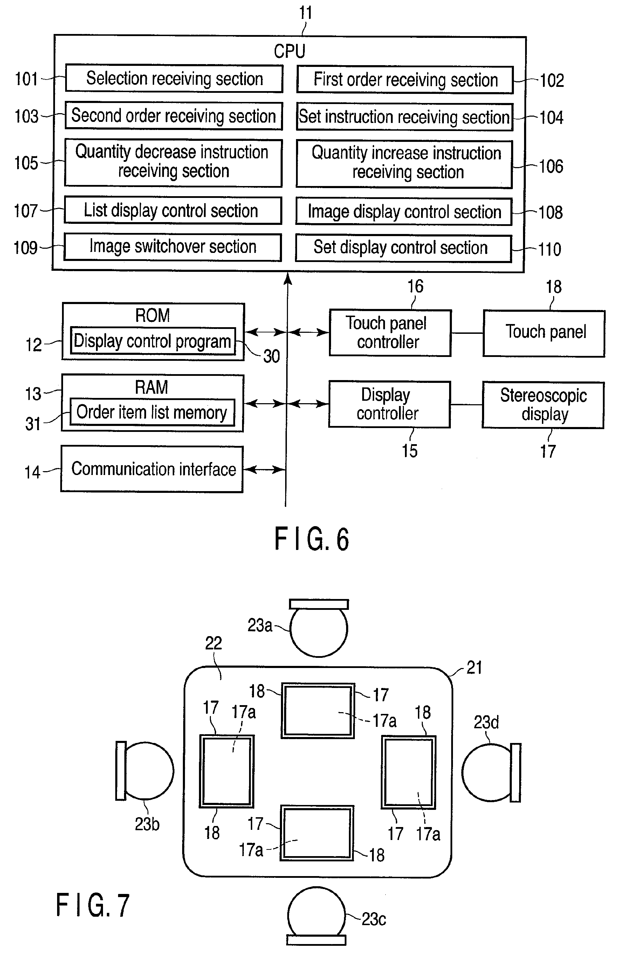

FIG. 6 is a block diagram of the electronic menu terminal 1. The electronic menu terminal 1 is a computer apparatus provided with a central processing unit (CPU) 11, read-only memory (ROM) 12, random access memory (RAM) 13, communication interface 14, display controller 15, and touch panel controller 16.

A LAN 4 is connected to the communication interface 14. The electronic menu terminal 1 can access the database server 2 through the communication interface 14, and acquire data of the databases 2A, 2B, 2C, and 2D. Further, the electronic menu terminal 1 can access the order management server 3 through the communication interface 14, and transmit the order data of the customer. The communication interface 14 constitutes a communication section.

The display controller 15 connects a stereoscopic display 17 thereto. The touch panel controller 16 connects a touch panel 18 thereto. The touch panel 18 is provided to be superposed on the stereoscopic display 17.

The stereoscopic display 17 is a display panel provided with a function of displaying a three-dimensional image to be stereoscopically viewable. In this embodiment, the naked-eye stereoscopic display not requiring special glasses is used. The naked-eye stereoscopic display includes a binocular display system (head tracking system, scanner backlight system, etc.) and multi-view display system (step barrier system, diagonal lenticular image system, etc.). In the present invention, the display system is not particularly limited. The stereoscopic display requiring glasses may also be used. However, in view of the use as the electronic menu terminal for a restaurant, the naked-eye stereoscopic display is preferable.

The stereoscopic display 17 is built into a top plate 22 of a restaurant table 21 as shown in FIG. 7. Further, the touch panel 18 is arranged on top of a screen 17a of the stereoscopic display 17. At this time, the screen 17a on which the touch panel 18 is arranged becomes substantially flush with the top surface of the top plate 22.

FIG. 7 is an example of attachment of the stereoscopic display 17 to the restaurant table 21 for which one customer seat 23a, 23b, 23c, and 23d is prepared at each side of the substantially rectangular top plate 22. As shown in FIG. 7, each stereoscopic display 17 is attached to a front part of each of the seats 23a to 23d.

The customer seated at the restaurant table 21 browses the images displayed on the stereoscopic display 17 in front of himself or herself, and appropriately touches the screen, whereby he or she can confirm the items to be served by the restaurant, and order the desired item.

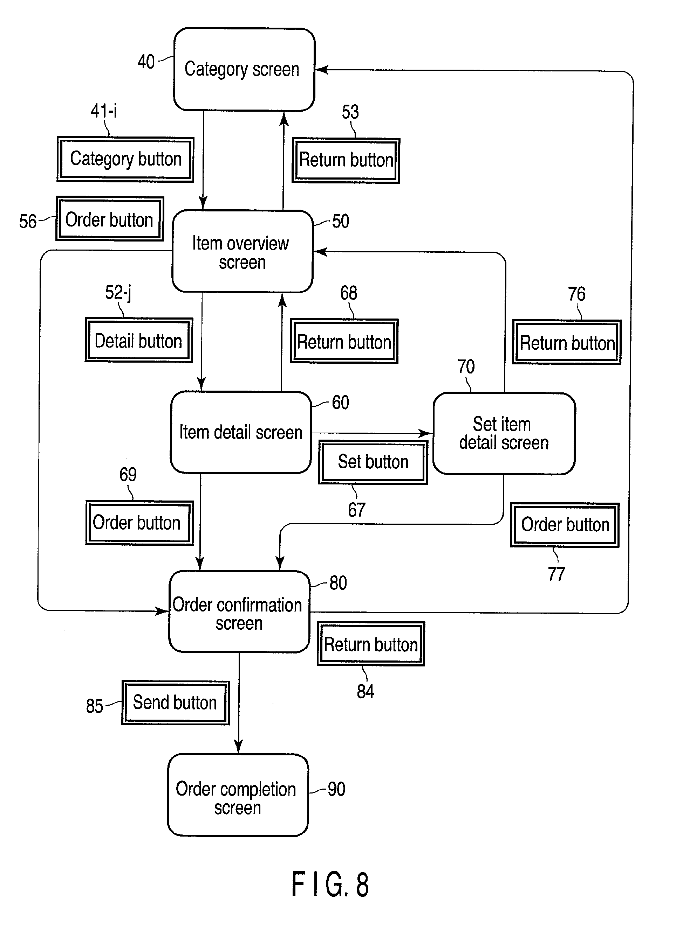

FIG. 8 is a transition view of screens to be displayed on the stereoscopic display 17 from the time when a customer confirms an item to the time when the order for the item is completed. The screens include a category screen 40, item overview screen 50, item detail screen 60, set item detail screen 70, order confirmation screen 80, and order completion screen 90.

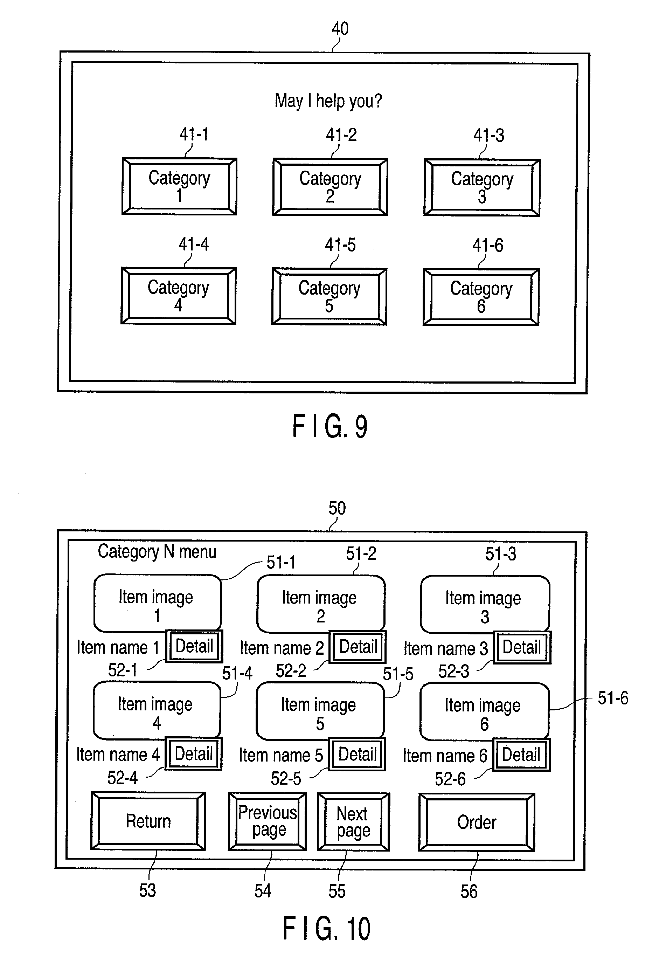

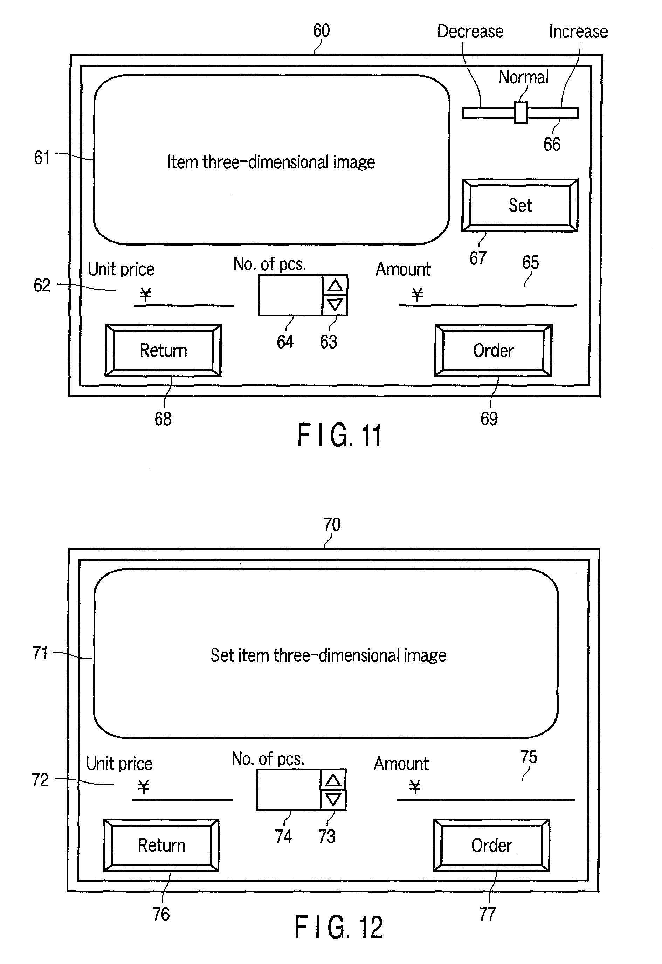

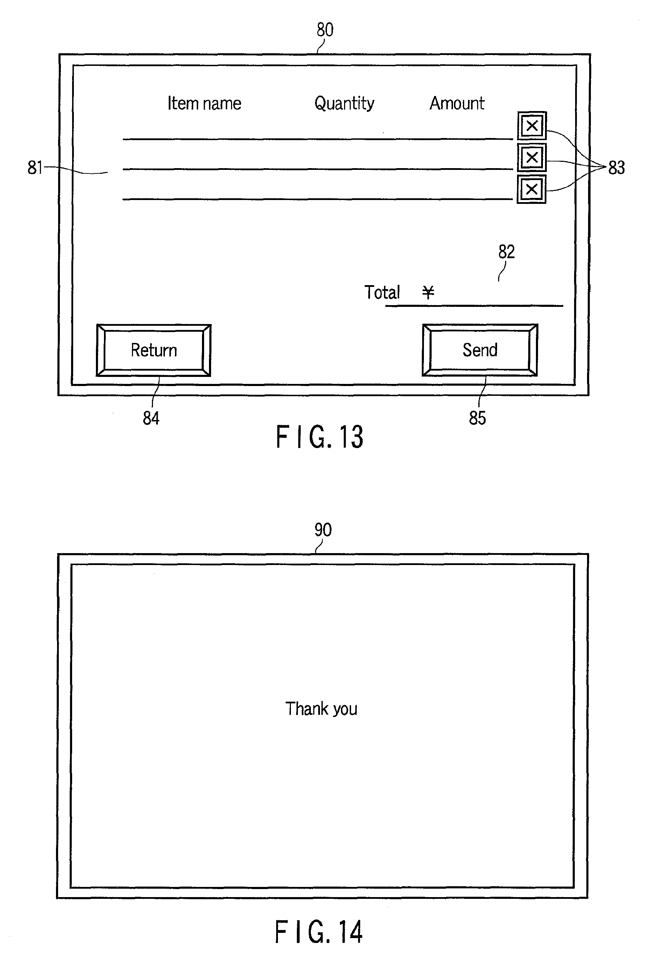

FIG. 9 is one layout example of the category screen 40. FIG. 10 is one layout example of the item overview screen 50. FIG. 11 is one layout example of the item detail screen 60. FIG. 12 is one layout example of the set item detail screen 70. FIG. 13 is one layout example of the order confirmation screen 80. FIG. 14 is one layout example of the order completion screen 90.

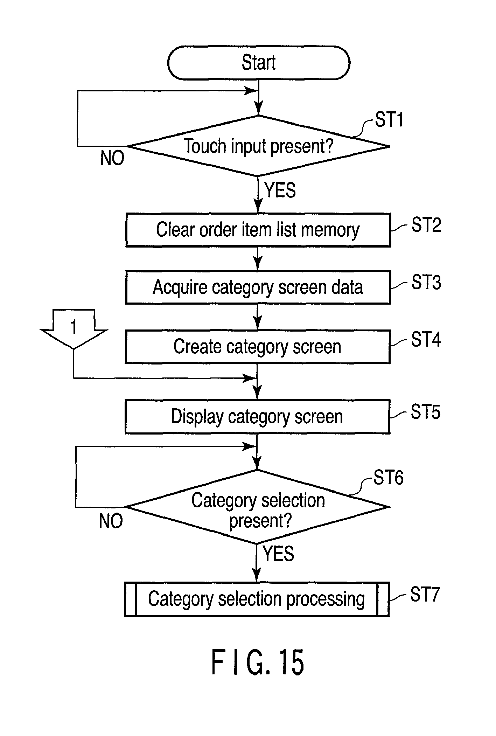

The CPU 11 controls the display processing of the respective screens 40 to 90 in accordance with a display control program 30 stored in a ROM 12. In order to realize this control, the CPU 11 includes functions of a selection receiving section 101, first order receiving section 102, second order receiving section 103, set instruction receiving section 104, quantity decrease instruction receiving section 105, quantity increase instruction receiving section 106, list display control section 107, image display control section 108, image switchover section 109, and set display control section 110. Each function will be specifically described below by the flowcharts of FIGS. 15 to 19.

The operation procedure from the time when a customer confirms the item to the time when the customer completes the order, and the processing procedure of the CPU 11 for the operation of the customer will be described below by using the flowcharts of FIGS. 14 to 18.

When the display control program 30 is started, the CPU 11 of the electronic menu terminal 1 in the idle state waits for a signal from the touch panel 18 as shown in step ST1 of FIG. 15.

A customer seated in the seat of the restaurant table 21 touches the screen of the stereoscopic display 17 arranged in front of the customer's seat before starting the order. When the screen is touched, a signal from the touch panel 18 is input to the touch panel controller 16. Upon detection of the signal from the touch panel 18, the CPU 11 clears the order item list memory 31 (ST2). The order item list memory 31 is formed in the RAM 13.

Subsequently, the CPU 11 captures a record of the category screen 40 from the screen database 2D (ST3). Further, on the basis of various setting information items of the record, the CPU 11 creates the category screen 40 (ST4), and displays the screen 40 on the stereoscopic display 17 (ST5).

The category screen 40 is a screen used to introduce categories into which respective items of the menu are classified to the customer, and receive selection of any one of the categories. As shown in FIG. 9, on the category screen 40, a plurality of (six in FIG. 9) category buttons 41 (41-1, 41-2, 41-3, 41-4, 41-5, and 41-6) prepared for each of the categories are displayed in the form of stereoscopically viewable three-dimensional buttons.

Having browsed the category screen 40, the customer touches any one category button 41-i (1 ≤ I ≤ 6) on which the desired category name is displayed to select the category.

The CPU 11 waits for a category to be selected (ST6). When any one category button 41-i is touched, a signal is input from the touch panel 18 to the touch panel controller 16. Upon detection of the signal from the touch panel 18, the CPU 11 determines, on the basis of the signal, which category button 41-i has been touched, i.e., which category has been selected.

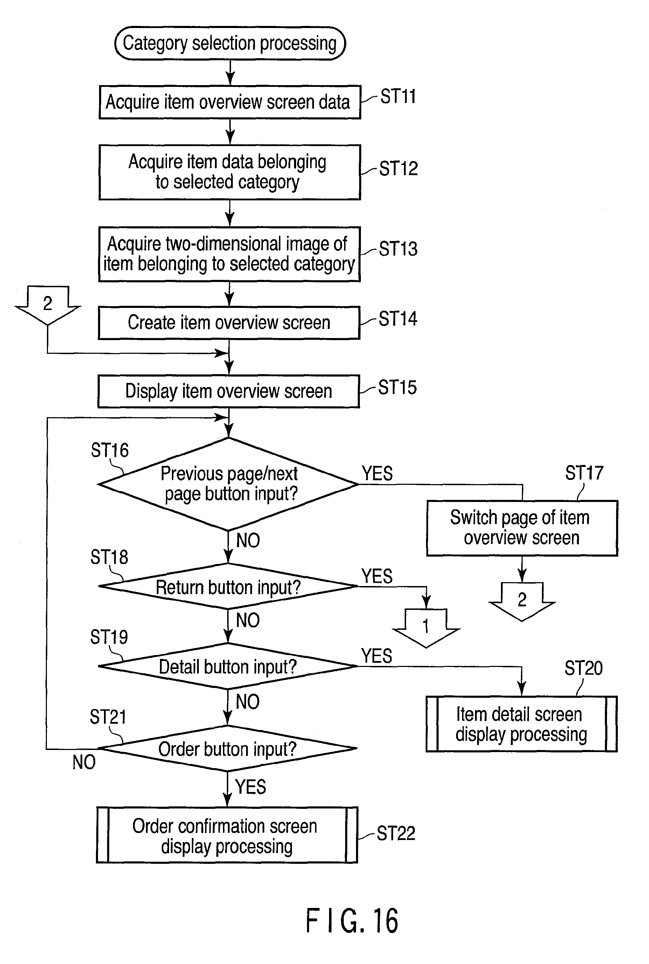

When the category is selected (YES in ST6), the CPU 11 starts the category selection processing specifically shown by the flowchart of FIG. 16 (ST7).

First, the CPU 11 captures the record of the item overview screen 50 from the screen database 2D (ST11). Further, the CPU 11 captures records of all the items belonging to the selected category from the item database 2B (ST12).

Then, the CPU 11 extracts the two-dimensional image code from the record of each item. Further, the CPU 11 captures all the records in each of which two-dimensional image data specified by the extracted two-dimensional image code is set from the image database 2C (ST13).

The CPU 11 creates the item overview screen 50 on the basis of various data of the records acquired in the processing of ST11 to ST13 (ST14: item overview creation section 91), and displays the screen 50 on the stereoscopic display 17 (ST15: list display control section 107).

The item overview screen 50 is a screen used to introduce the items belonging to the selected category to the customer, and receive an order of any one item. As shown in FIG. 10, on the item overview screen 50, a plurality of (six in FIG. 10) item image display columns 51 (51-1, 51-2, 51-3, 51-4, 51-5, and 51-6) are formed. Further, detail buttons 52 (52-1, 52-2, 52-3, 52-4, 52-5, and 52-6) are displayed to correspond to the respective item image display columns 51. Further, a return button 53, previous page button 54, next page button 55, and order button 56 are displayed in the form of stereoscopically viewable three-dimensional buttons. These screen configuration elements 51 to 56 are included in the record of the item overview screen 50.

In the respective item image display columns 51, two-dimensional images of the items belonging to the selected category are displayed. Further, the names of the items are also displayed on the lower side of the images. The two-dimensional image is formed of the two-dimensional image data of the record captured from the image database 2C. The name of the item is recorded in the record captured from the item database 2B.

It should be noted that when the number of items belonging to the selected category exceeds the number of item image display columns 51, the item overview screen 50 is formed into a plurality of separate pages. Further, first, the first page is displayed.

After displaying the item overview screen 50, the CPU 11 waits for an input of any one of the buttons on the screen.

When although the item overview screen 50 has been browsed, no item which the customer wants to order is found, the customer touches the previous page button 54, next page button 55 or return button 53.

When the previous page button 54 or next page button 55 is touched (YES in ST16), the CPU 11 switches the page of the item overview screen (ST17). Further, the CPU 11 displays the item overview screen 50 the page of which has been switched on the stereoscopic display 17 (ST15). That is, when the previous page button 54 is touched, the item overview screen 50 is switched to the page preceding by one page, and when the next page button 55 is touched, the screen 50 is switched to the page succeeding by one page. It should be noted that when the current page is the first page, the previous page button 54 does not function. Likewise, when the current page is the last page, the next page button 55 does not function.

When the return button 53 is touched (YES in ST18), the CPU 11 returns the screen of the stereoscopic display 17 to the category screen 40 (ST5).

When the customer wants to confirm the current order contents, the customer touches the order button 56.

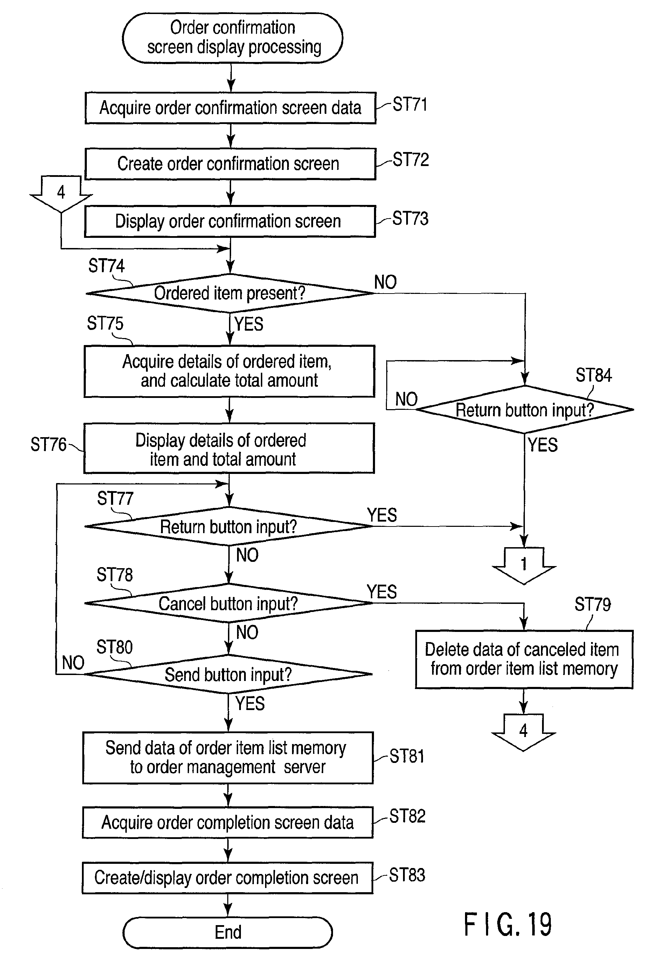

When the order button 56 is touched (YES in ST21), the CPU 11 executes the order confirmation screen display processing specifically shown in the flowchart of FIG. 19 (ST22). The order confirmation screen display processing will be described later.

When the item which the customer wants to order is found, the customer touches a detail button 52-j corresponding to the item image display column 51-j (1≤j≤6).

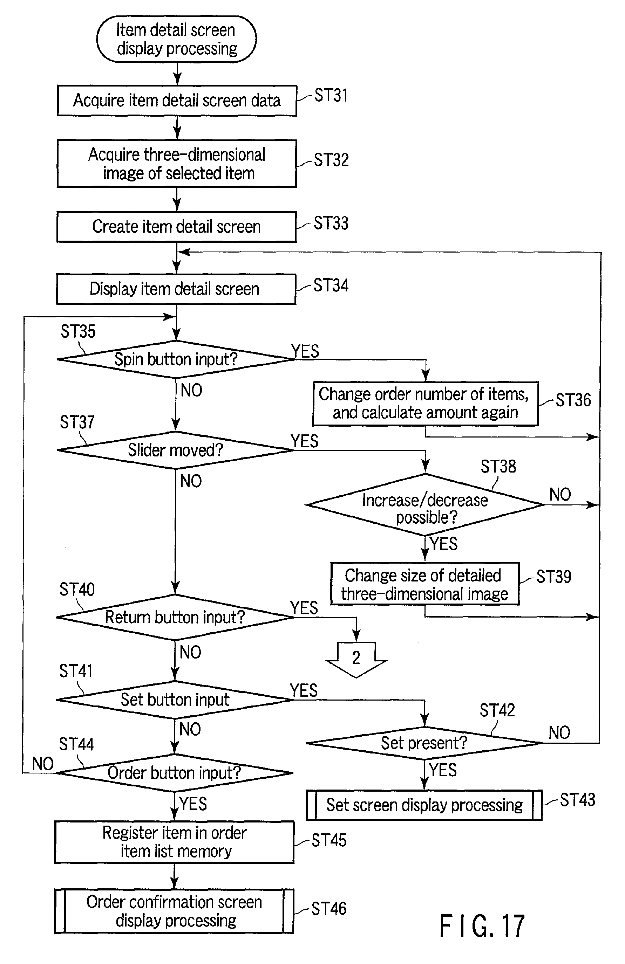

When the detail button 52-j is touched (YES in ST19), the CPU 11 executes the item detail screen display processing specifically shown in the flowchart of FIG. 17 (ST20: selection receiving section 101).

First, the CPU 11 captures the record of the item detail screen 60 from the screen database 2D (ST31). Then, the CPU 11 captures the record of the selected item from the item database 2B. The selected item is the item an image of which is displayed in the item image display column 51-j corresponding to the touch-operated detail button 52-j.

The CPU 11 extracts the three-dimensional image code from the record of the selected item. Further, the CPU 11 captures a record in which three-dimensional image data specified by the extracted three-dimensional image code is set (ST32).

The CPU 11 creates the item detail screen 60 on the basis of various data items of the records acquired in the processing of ST31 to ST32 (ST33), and displays the screen 60 on the stereoscopic display 17 (ST34: image display control section 108).

The item detail screen 60 is a screen used to introduce the detail information on the selected item to the customer, and receive an order. As shown in FIG. 11, on the item detail screen 60, the item detail image display column 61 is formed. Further, display columns 62 of the item, unit price column 62, edit field 64 with up-and-down spin buttons 63, amount display column 65, slider 66, set button 67, return button 68, and order button 69 are displayed thereon. The set button 67, return button 68, and order button 69 are displayed in the form of stereoscopically viewable three-dimensional buttons. These screen configuration elements 61 to 69 are included in the record of the item detail screen 60.

In the item three-dimensional image display column 61, a three-dimensional image of the selected item is displayed. The three-dimensional image is formed by the three-dimensional image data of the record acquired from the image database 2C. Accordingly, the size of the three-dimensional image in the two-dimensional direction (X-Y direction) is substantially identical to the size of the actual item to be displayed. Further, the size thereof in the height direction (Z direction) is also made as close as possible to the size of the actual item.

As a result of this, in the item three-dimensional image display column 61, a three-dimensional image having substantially the size of the actual item is displayed to be stereoscopically viewable. Accordingly, it is possible for the customer viewing the item detail screen 60 to accurately appreciate the nature of the volume of the item from the three-dimensional image.

In the unit price display column 62, a unit price read from the record of the selected item is displayed. In the edit field 64, the default value "1" of the order quantity is displayed. In the amount display column 65, an amount obtained by multiplying the unit price of the selected item by the order quantity is displayed.

When the item detail screen 60 is browsed, and the number of the ordered items is to be changed, the customer touches the spin button 63. When the spin button 63 is touched (YES in ST35), the CPU 11 increases or decreases the order quantity in the edit field 64 by "1" at a time. Further, the CPU 11 calculates the amount again, and updates the value in the amount display column 65 (ST36).

When the quantity of the selected item is to be increased or decreased, the customer slides the slider 66 to the right or left facing toward the screen. When the slider 66 is slid (YES in ST37), the CPU 11 determines that an instruction to increase or decrease the quantity of the selected item the three-dimensional image of which is displayed in the item three-dimensional image display column 61 has been issued (quantity increase instruction receiving section 106, quantity decrease instruction receiving section 105). The CPU 11 checks the quantity increase flag or quantity decrease flag included in the record of the selected item (ST38).

More specifically, when the slider 66 is slid to the right side facing the screen, an instruction to increase the quantity is issued. In this case, the CPU 11 checks the quantity increase flag recorded in the record of the selected item. When it is determined (YES in ST38), as a result of this, that the quantity can be increased, the CPU 11 extracts the quantity increase extra charge and quantity increase three-dimensional image code from the record of the selected item. Further, the CPU 11 captures a record in which quantity increase three-dimensional image data specified by the extracted quantity increase three-dimensional image code is set from the image database 2C, and displays the three-dimensional image created by using the quantity increase three-dimensional image data in the item detail image display column 61 (ST39: image switching section 109). Further, the CPU 11 adds the quantity increase extra charge to the unit price to calculate the amount in the amount display column 65 again.

When the slider 66 is slid to the left side facing the screen, an instruction to decrease the quantity is issued. In this case, the CPU 11 checks the quantity decrease flag recorded in the record of the selected item. When it is determined, as a result of this, that the quantity can be decreased, the CPU 11 extracts the quantity decrease discount and quantity decrease three-dimensional image code from the record of the selected item. Further, the CPU 11 captures a record in which quantity decrease three-dimensional image data specified by the extracted quantity decrease three-dimensional image code is set from the image database 2C, and displays the three-dimensional image created by using the quantity decrease three-dimensional image data in the item detail image display column 61. Further, the CPU 11 subtracts the quantity decrease discount from the unit price to calculate the amount in the amount display column 65 again.

It should be noted that when, as a result of checking the quantity increase flag or quantity decrease flag, the quantity cannot be increased or decreased (NO in ST38), the size of the three-dimensional image is not changed.

When the item detail screen 60 is to be browsed, and the selected item is to be ordered, the customer touches the order button 69. When the order button 69 is touched (YES in ST44), the CPU 11 registers the record of the selected item in the order item list memory 31 as data of the ordered item. At this time, the order quantity and amount are also registered. Furthermore, when an instruction to increase or decrease the quantity is issued, information (flag) indicating that a quantity increase instruction or quantity decrease instruction is issued is also registered (ST45: first order receiving section 102). After that, the CPU 11 executes the order confirmation screen display processing (ST46).

When the order of the selected item is to be canceled, the customer touches the return button 68. When the return button 68 is touched (ST40), the CPU 11 returns the screen of the stereoscopic display 17 to the item overview screen 50 without registering the data of the ordered item (ST15).

When a set menu including the selected item is to be ordered, the customer touches the set button 67. When the set button is touched (set instruction receiving section 104), the CPU 11 checks the set flag included in the record of the selected item (ST42). When the set flag is reset (NO in ST42), the set menu including the selected item is not present. In this case, the CPU 11 annuls the input of the set button 67.

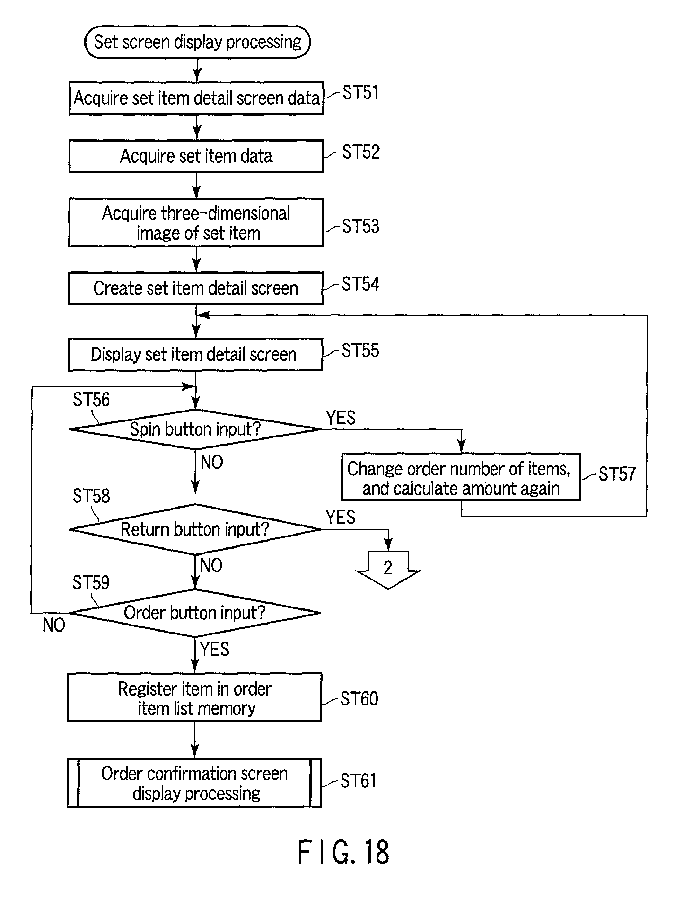

When the set flag is set (YES in ST42), the set menu including the selected item is present. In this case, the CPU 11 executes the set screen display processing specifically shown in the flowchart of FIG. 18 (ST43).

First, the CPU 11 acquires the record of the set item detail screen 70 from the screen database 2D (ST51). Then, the CPU 11 extracts the set item code from the record of the selected item. Further, the CPU 11 acquires the record of the set menu item including the set item code from the item database 2B (ST53).

The CPU 11 extracts the three-dimensional image code from the record of the set menu item. Further, the CPU 11 acquires the record in which three-dimensional image data specified by the extracted three-dimensional image code from the image database 2C (ST53).

The CPU 11 creates the set item detail screen 70 on the basis of the various data of the record acquired in the processing of ST51 to ST53 (ST54), and displays the screen 70 on the stereoscopic display 17 (ST55: set display control section 110).

The set item detail screen 70 is a screen for introducing the detailed information of the selected set menu item to the customer, and receiving the order. As shown in FIG. 12, on the set item detail screen 70, the set item three-dimensional image display column 71 is formed. Further, the unit price display column 72, edit field 74 with up-and-down spin buttons 73, amount display column 75, return button 76, and order button 77 are displayed thereon. The return button 76 and order button 77 are displayed in the form of stereoscopically viewable three-dimensional buttons. These screen configuration elements 71 to 77 are included in the record of the set item detail screen 70.

In the set item three-dimensional image display column 71, a three-dimensional image of the set menu item is displayed. The three-dimensional image is formed by the three-dimensional image data of the record acquired from the image database 2C. Accordingly, the size of the three-dimensional image in the two-dimensional direction (X-Y direction) is substantially identical to the size of the actual item to be displayed. Further, the size thereof in the height direction (Z direction) is also made as close as possible to the size of the actual item.

As a result of this, in the set item three-dimensional image display column 71, a three-dimensional image having substantially the size of the actual item is displayed to be stereoscopically viewable. Accordingly, it is possible for the customer viewing the set item detail screen 70 to accurately appreciate the nature of the volume of the set menu item from the three-dimensional image.

In the unit price display column 72, a unit price read from the record of the set menu item is displayed. In the edit field 74, the default value "1" of the order quantity is displayed. In the amount display column 75, an amount obtained by multiplying the unit price of the selected item by the order quantity is displayed.

When the set item detail screen 70 is browsed, and the number of the ordered items is to be changed, the customer touches the spin button 73. When the spin button 73 is touched (YES in ST56), the CPU 11 increases or decreases the order quantity in the edit field 74 by "1" at a time. Further, the CPU 11 calculates the amount again, and updates the value in the amount display column 75 (ST57).

When the set item detail screen 70 is to be browsed, and the set menu item is to be ordered, the customer touches the order button 77. When the order button 77 is touched (YES in ST59), the CPU 11 registers the record of the set menu item in the order item list memory 31 as data of the ordered item. At this time, the order quantity and amount are also registered (st60: second selection receiving section 103). After that, the CPU 11 executes the order confirmation screen display processing (ST61).

When the order of the set menu item is to be canceled, the customer touches the return button 76. When the return button 76 is touched (ST58), the CPU 11 returns the screen of the stereoscopic display 17 to the item overview screen 50 without registering the data of the ordered item (ST15).

As described above, the customer who has located the item which they want to order on the item overview screen 50 touches a detail button 52-j corresponding to the item image display column 51-j a two-dimensional image of which is displayed. Then, the detail screen 60 of the selected item is displayed on the stereoscopic display 17. On the detail screen 60, a three-dimensional image of the selected item is displayed. Accordingly, the customer can visualize not only the detailed contents of the selected item, but also the actual nature of the volume thereof.

When the selected item is to be ordered, the customer touches the order button 69. Then, the order data of the selected item is registered in the order item list memory 31.

Further, when the set menu including the selected item is to be confirmed, the customer touches the set button 67 of the item detail screen 60. Then, the detail screen 70 of the set menu item is displayed on the stereoscopic display 17. On the detail screen 70, a three-dimensional image of the set menu item is displayed. Accordingly, the customer can visualize not only the detailed contents of the set menu item, but also the actual nature of the volume thereof.

When the set menu item is to be ordered, the customer touches the order button 77. Then, the order data of the set menu item is registered in the order item list memory 31.

Next, the procedure of the order confirmation screen display processing to be executed in ST22, ST46 or ST61 will be described below with reference to the flowchart of FIG. 19.

In the state where the item overview screen 50, item detail screen 60 or set item detail screen 70 is displayed, when the order button 56, order button 69 or order button 77 is touched, the CPU 11 acquires the record of the order confirmation screen 80 from the screen database 2D (ST71). Further, the CPU 11 creates an order confirmation screen 80 on the basis of the data of this record (ST72), and displays the screen 80 on the stereoscopic display 17 (ST73).

The order confirmation screen 80 is a screen used to make the customer confirm the ordered contents. As shown in FIG. 13, on the order confirmation screen 80, the item name of the ordered item, details display column 81 constituted of the quantity and amount, and total amount display column 82 are formed. In the details display column 81, a cancel button 83 is formed for each details row. Further, a return button 84 and send button 85 are displayed as stereoscopically viewable three-dimensional buttons.

The CPU 11 searches the order item list memory 31 for the data of the ordered item to determine whether or not the data of the ordered item is registered therein (ST74). When the data is registered therein (YES in ST74), the CPU 11 acquires the name, order quantity, and amount of the ordered item from the registered data, and calculates the total amount (ST75). Further, the CPU 11 displays the name, order quantity, and amount of the ordered item in the details display column 81 of the order confirmation screen 80. Further, the CPU 11 displays the total amount in the total amount display column 82 (ST76).

The CPU 11 waits for any one of the cancel button 83, return button 84, and send button 85 to be input.

When the order confirmation screen 80 is browsed, and ordering is to be continued, the customer touches the return button 84. When the return button 84 is touched (YES in ST77), the CPU 11 returns the screen of the stereoscopic display 17 to the category screen 40 (ST5).

When the order is to be canceled, the customer touches a cancel button 83 corresponding to the row in which the details of the item to be canceled is displayed in the details display column 81. When the cancel button 83 is touched (YES in ST78), the CPU 11 deletes the registered data of the item for which a delete instruction has been issued from the order item list memory 31 (ST79). Thereafter, the CPU 11 returns to the processing of ST74.

When the order is to be determined, the customer touches the send button 85. When the send button 85 is touched (YES in ST80), the CPU 11 transmits the data of the ordered item registered in the order item list memory 31 to the order management server 3 (ST81).

Subsequently, the CPU 11 captures the record of the order completion screen 90 from the screen database 2D (ST82). Further, the CPU 11 creates the order completion screen 90 on the basis of the data of the record, and displays the screen 90 on the stereoscopic display 17 (ST83).

By the procedure described above, the order of one customer is completed. Thereafter, the CPU 11 returns to the idle state.

It should be noted that when, as a result of searching the order item list memory 31 for the data of the ordered item, the data of the ordered item is not registered in the memory 31 (NO in ST74), the CPU 11 waits for the return button 84 to be input (ST84). When the return button 84 is touched (YES in ST84), the CPU 11 returns the screen of the stereoscopic display 17 to the category screen 40 (ST5).

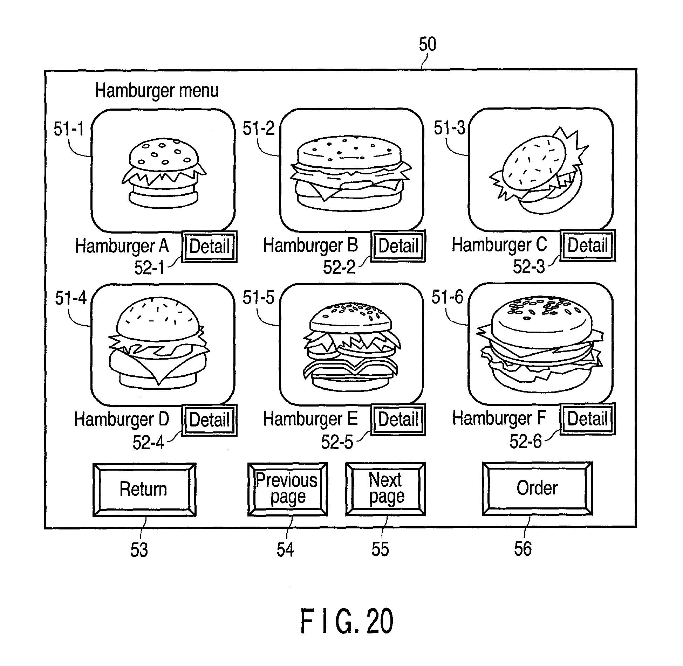

FIG. 20 is an example of an item overview screen 50 to be displayed when the category "hamburger" is selected. In the respective item image display columns 51-1 to 51-6 on the screen, two-dimensional images of the items belonging to the category "hamburger" are displayed.

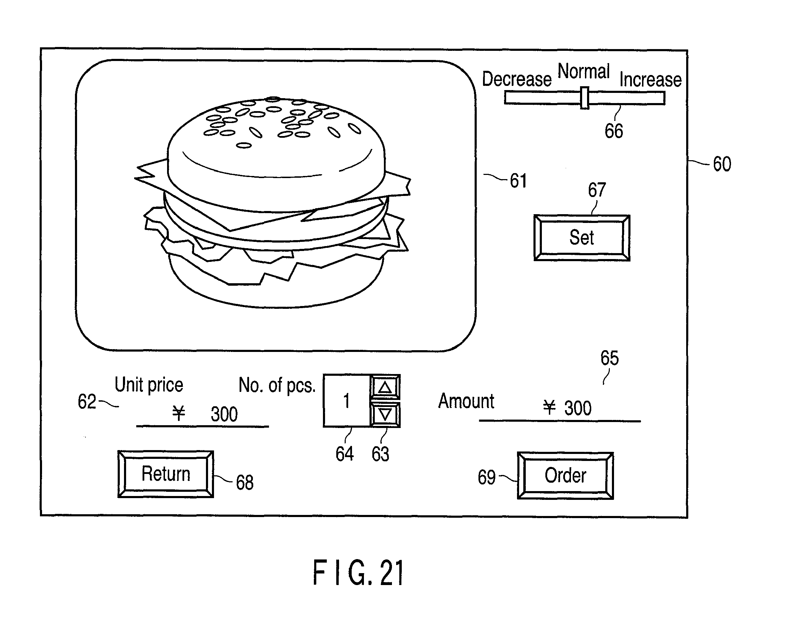

When the item overview screen 50 is to be browsed, and the item "hamburger F" is to be ordered, the customer touches the detail button 52-6. Then, the screen on the stereoscopic display 17 is switched over to the item detail screen 60 shown in FIG. 21. On the item detail screen 60, a three-dimensional image of the item "hamburger F" is displayed to be stereoscopically viewable. The size of the image is substantially that of the actual item "hamburger F". Accordingly, the customer can appreciate the nature of the volume of the item "hamburger F" in a substantially accurate manner.

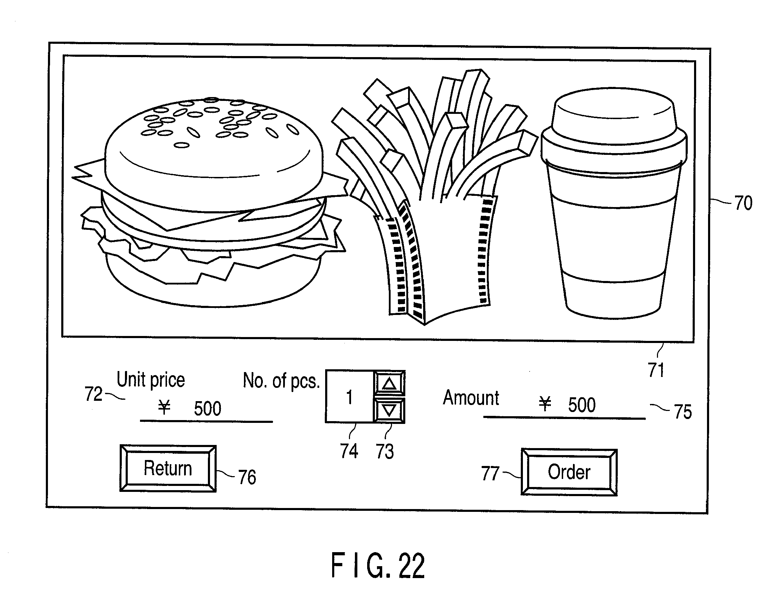

Here, a set menu of the item "hamburger F" is to be ordered, the customer touches the set button 67. Then, the screen of the stereoscopic display 17 is switched to the set item detail screen 70 shown in FIG. 22. On the set item detail screen 70, three-dimensional images of the item "hamburger F" of the main menu, and items "French fries" and "drink" of the submenu to be added to the main menu are displayed to be stereoscopically viewable. The sizes of the images are substantially the exact sizes of the respective items "hamburger F", "French fries", and "drink". Accordingly, the customer can appreciate the nature of the volume of the set menu item including the item "hamburger F" in a substantially accurate manner.

As described above, according to the electronic menu terminal 1 of this embodiment, it is possible to visualize the nature of the volume of the item from the three-dimensional image before ordering the item of the menu. Accordingly, the customer can securely order a desired quantity. As a result of this, the quantity of the served item is neither less than nor more than that visualized by the customer, and the level of the customer-satisfaction can be enhanced.

Further, the data of the item ordered by the customer by himself or by herself from the electronic menu terminal 1 is directly transmitted to the order management server 3. Further, the order data is used as a cooking instruction to the kitchen terminal 6, and is used for the account processing at the POS terminal 7. Accordingly, by employing the electronic menu terminal 1 of this embodiment, it is possible to construct a self-order restaurant system providing a very high degree of satisfaction to both the customer side and restaurant side.

### (Second embodiment)

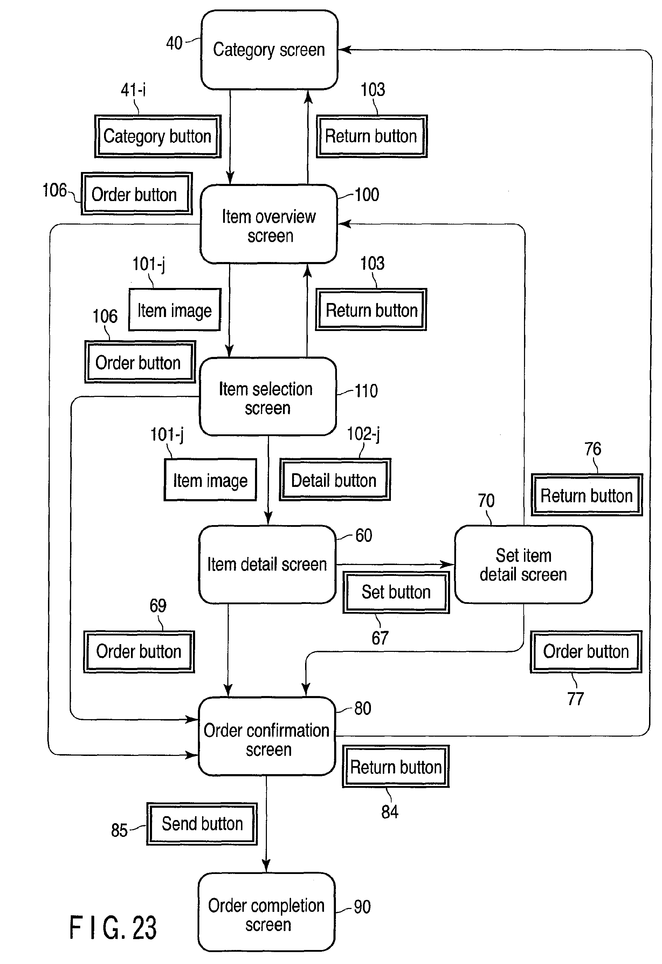

Next, a second embodiment according to the present invention will be described below with reference to FIGS. 23 to 28. This embodiment is also of the case where the present invention is applied to an electronic menu terminal of an electronic menu system to be constructed in a restaurant like the first embodiment. Only parts different from the first embodiment will be described below.

FIG. 23 is a transition view of screens to be displayed on a stereoscopic display 17 from the time when a customer confirms an item to the time when the order for the item is completed. The screens include a category screen 40, item overview screen 100, item selection screen 110, item detail screen 60, set item detail screen 70, order confirmation screen 80, and order completion screen 90.

In the second embodiment, when any item image display column 101-i of an item overview screen 100 is touched, the screen is switched over to an item selection screen 110.

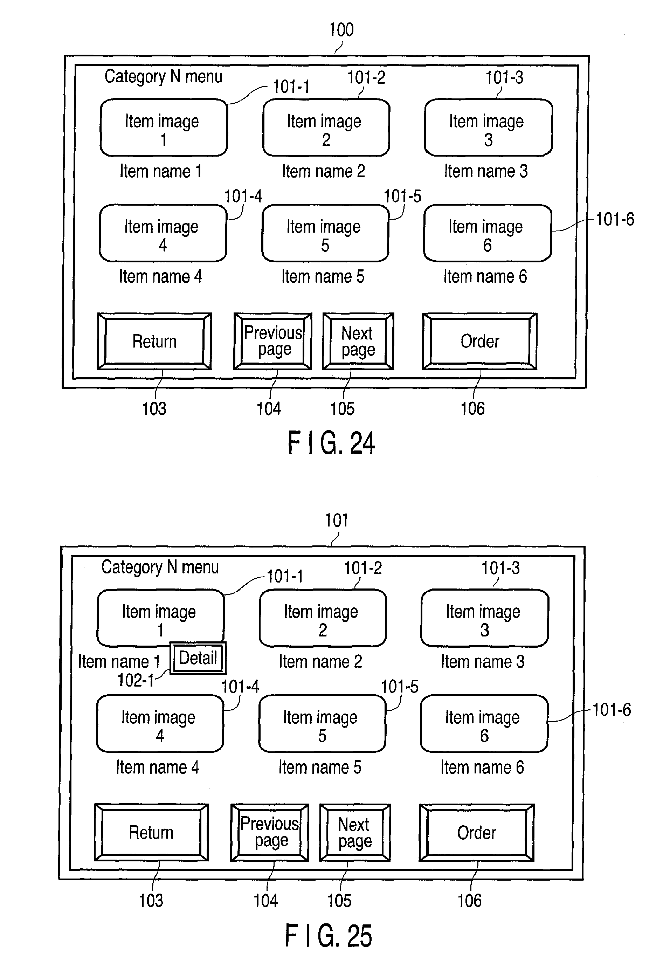

FIG. 24 is a layout example of the item overview screen 100. In the second embodiment, detail buttons are omitted from the item overview screen 100.

FIG. 25 is the item selection screen 110 to be displayed when the item image display column 101-i is touched. As shown in FIG. 25, a detail button 102-1 is displayed for the touched item image display column 101-1. The processing to be executed after the detail button 102-1 is touched is identical to the first embodiment.

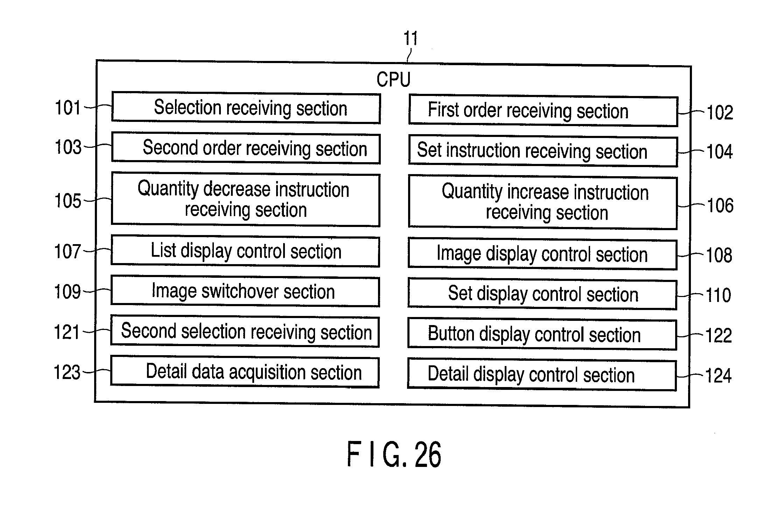

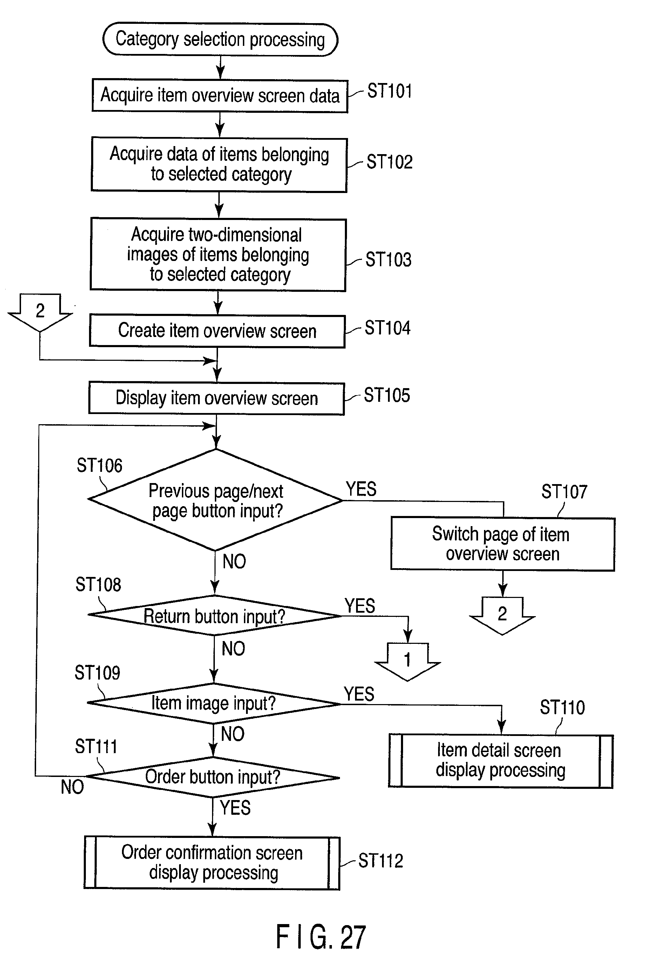

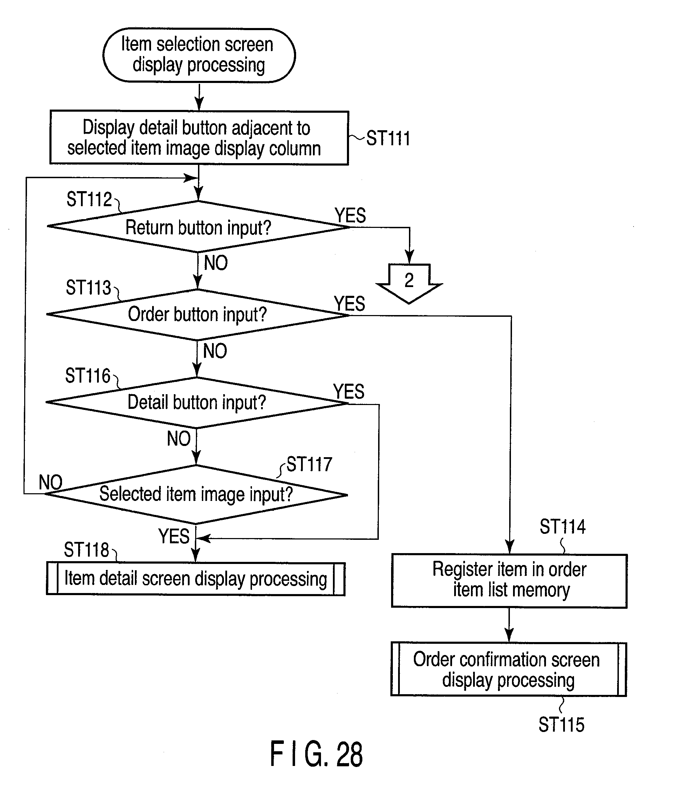

The CPU 11 controls the display processing of the respective screens 40, and 60 to 110 in accordance with a display control program 30 stored in a ROM 12. In order to realize this control, the CPU 11 further includes, as shown in FIG. 26, functions of a second selection receiving section 121, button display control section 122, detail data acquisition section 123, and detail display control section 124. Each function will be specifically described below by the flowcharts of FIGS. 27 and 28.

In the state where the category screen 40 is displayed, when any category button 41-i is touched, the CPU 11 starts the category selection processing specifically shown in the flowchart of FIG. 27.

First, the CPU 11 acquires the record of the item overview screen 50 from the screen database 2D (ST101). Further, the CPU 11 acquires all the records of items belonging to the selected category from the item database 2B (ST102).

Subsequently, the CPU 11 extracts two-dimensional image codes from the records of the respective items. Further, the CPU 11 acquires all the records in each of which two-dimensional image data specified by the extracted two-dimensional image code is set from the image database 2C (ST103).

The CPU 11 creates an item overview screen 100 on the basis of the various data of the records acquired in the processing of ST101 to ST103 (ST104), and displays the screen 100 on the stereoscopic display 17 (ST105: list display control section 107).

The item overview screen 100 is a screen for introducing the items of the menu belonging to the selected category to the customer, and receiving the order of any item. As shown in FIG. 24, on the item overview screen 100, a plurality (six in FIG. 24) of item image display columns 101 (101-1, 101-2, 101-3, 101-4, 101-5, and 101-6) are formed. Furthermore, a return button 103, previous page button 104, next page button 105, and order button 106 are displayed in the form of stereoscopically viewable three-dimensional buttons. These screen configuration elements 101, and 103 to 106 are included in the record of the item overview screen 100.

In the respective item image display columns 101, two-dimensional images of the items belonging to the selected category are displayed. Further, the names of the items are also displayed on the lower side of the images. The two-dimensional image is formed of the two-dimensional image data of the record captured from the image database 2C. The name of the item is recorded in the record captured from the item database 2B.

It should be noted that when the number of items belonging to the selected category exceeds the number of item image display columns 101, the item overview screen 100 is formed into a plurality of separate pages. Further, first, the first page is displayed.

After displaying the item overview screen 100, the CPU 11 waits for an input of any item screen column 101-j or any button 103 to 106.

When although the item overview screen 100 has been browsed, no item which the customer wants to order is found, the customer touches the previous page button 104, next page button 105 or return button 103.

When the previous page button 104 or next page button 105 is touched (YES in ST106), the CPU 11 switches the page of the item overview screen 100 (ST107). Further, the CPU 11 displays the item overview screen 100 the page of which has been switched on the stereoscopic display 17 (ST105). That is, when the previous page button 104 is touched, the item overview screen 100 is switched to the page preceding by one page, and when the next page button 105 is touched, the screen 100 is switched to the page succeeding by one page. It should be noted that when the current page is the first page, the previous page button 104 does not function. Likewise, when the current page is the last page, the next page button 105 does not function.

When the return button 103 is touched (YES in ST108), the CPU 11 returns the screen of the stereoscopic display 17 to the category screen 40 (ST5).

When the customer wants to confirm the current order contents, the customer touches the order button 106.

When the order button 106 is touched (YES in ST111), the CPU 11 executes the order confirmation screen display processing specifically shown in the flowchart of FIG. 19 (ST112).

When the item which the customer wants to order is found, the customer touches an item image display column 101-j (1 ≤ j ≤ 6) of the item.

When the item image display column 101-j (1 ≤ j ≤ 6) is touched, the CPU 11 executes the item selection screen display processing specifically shown in FIG. 28 as ST110.

First, the CPU 11 specifies the touched item image display column 101-j. Further, as shown in FIG. 25, the CPU 11 displays a detail button 102-j adjacent to the specified item image display column 101-j (ST111: button display control section 112). The detail button 102-j is displayed in the form of a stereoscopically viewable three-dimensional button.

It should be noted that although in FIG. 25, the display position of the detail button 102-j is set at the lower right-hand position of the item image display column 101-j, the display position thereof is not limited to the above position. In short, it is sufficient if the display position is a position corresponding to the image of the selected item.

After displaying the detail button 102-j, the CPU 11 waits for an input of any one of the buttons 102-j, and 103 to 106 on the screen, or waits for the item image display column 101-j for which the detail button 102-j is displayed to be touched and input again.

When an order of the item whose two-dimensional image is displayed in the item image display column 101-j for which the detail button 102-j is displayed is to be canceled, the customer touches the return button 103.

When the return button 103 is touched (YES in ST112), the CPU 11 returns the screen of the stereoscopic display 17 to the most recent item overview screen 100 (ST105).

When the item whose two-dimensional image is displayed in the item image display column 101-j for which the detail button 102-j is displayed is to be ordered, the customer touches the order button 106.

When the order button 106 is touched (YES in ST113), the CPU 11 registers the record of the selected item in the order item list memory 31 as the data of the ordered item. At this time, the CPU 11 also registers the order quantity and amount (ST114: first order receiving section 102). After this, the CPU 11 executes the order confirmation screen display processing shown in FIG. 19 (ST115).

When the detailed information on the item whose two-dimensional image is displayed in the item image display column 101-j for which the detail button 102-j is displayed is desired to be known, the customer touches the item image display column 101-j or detail button 102-j.

When the detail button 102-j is touched (YES in ST116) or the item image display column 101-j for which the detail button 102-j is displayed is touched (YES in ST117: second selection receiving section 121), the CPU 11 executes the item detail screen display processing specifically shown in FIG. 17 (ST118).

The item detail screen display processing and order confirmation screen display processing are identical to those of the first embodiment. That is, in the item detail screen display processing, the processing of steps ST31 and ST32 constitutes the detail data acquisition section 123. The processing of steps ST33 and ST34 constitutes the detail display control section 124.

In the first embodiment, the detail buttons 52 (52-1, 52-2, 52-3, 52-4, 52-5, and 52-6) are displayed in advance on the item overview screen 50 in such a manner that the detail buttons 52 respectively correspond to the item image display columns 51 (51-1, 51-2, 51-3, 51-4, 51-5, and 51-6). Further, when the item overview screen 50 is browsed, and the item which the customer wants to order is found, the customer touches the detail button 52-j corresponding to the item image display column 51-j (1 ≤ j ≤ 6) of the item.

At this time, there is sometimes a customer who does not touch the detail button 52-j and touches the item image display column 51. Even when the item image display column 51 is touched, there occurs no change on the screen. As described above, there is the possibility of the customer feeling annoyed because of the screen not changing as the customer likes.

In the second embodiment, the detail button 102 is not displayed on the item overview screen 100. As a result of this, when the item overview screen 100 is browsed, and the item which the customer wants to order is found, the customer touches the item image display column 101-j (1 ≤ j ≤ 6) of the item. Then, the screen is switched over to the item selection screen 110. On the item selection screen 110, a detail button 102-j is displayed in such a manner that the button 102-j corresponds to the touched item image display column 101-j.

Accordingly, the customer touches the detail button 102-j. Alternatively, the customer touches the item image display column 101-j once again. Then, the screen is switched over to the order confirmation screen 80.

As described above, according to the second embodiment, it is possible for the customer to cause the screen of the electronic menu terminal 1 to effect a transition as the customer visualizes, and hence it is possible to enhance the level of the customer-satisfaction.

It should be noted that the present invention is not limited to the above-mentioned embodiments as they are. In the implementation stage, the constituent element of the invention can be modified and embodied within the scope not deviating from the gist of the invention.

For example, in each of the embodiments described above, the size of the three-dimensional image of the item to be displayed on the stereoscopic display 17 is made substantially the exact size. However, the size is not necessarily the exact size. Even when only the size in the two-dimensional direction is made substantially identical to that of the actual item, and the height is made different from the exact size, it is possible to make the customer visualize the nature of the substantially accurate volume of the cooked item.

Further, in the above embodiment, the touch panel 18 is shown as an input device of the electronic menu terminal 1. However, the input device is not limited to the touch panel. For example, a pointing device such as a mouse, keyboard or the like can be used.

Further, in the above embodiment, an electronic menu terminal 1 is provided to each of the seats 23a to 23d of the restaurant table 21. However, one electronic menu terminal 1 may be provided to only each restaurant table 21.

Furthermore, in the above embodiment, the description has been given on the assumption that the display control program 30 which is the function of carrying out the invention is recorded in advance on the ROM 12 of the electronic menu terminal 1. However, the embodiment is not limited to the above configuration. The identical function may be downloaded from the network to the electronic menu terminal 1. Further, a recording medium in which the identical function is stored may be installed in the electronic menu terminal 1. As the recording medium, a recording medium of any form may be used as long as it is a recording medium such a CD-ROM capable of storing a program, and is a recording medium that can be read by the apparatus. Further, the function to be installed in advance or to be obtained by downloading may be the one that realizes the function in cooperation with the operating system (OS) or the like in the apparatus.

## Claims

1. An electronic menu apparatus (1) **characterized by** comprising:
a display (17) provided with a function of displaying a three-dimensional image to be stereoscopically viewable;
a capturing section configured to capture, from a menu data storage section (2B) configured to store, for each of items included in a menu, menu data including both item specifying data capable of recognizing the item, image data representing the three-dimensional image of the item and a price of the item, the menu data;
a list display control section (107) configured to display a list of the items on the display on the basis of item specifying data included in the menu data of each item captured by the capturing section;
a selection receiving section (101) configured to receive a selection input of any one item from among the respective items displayed on the list;
an image display control section (108) configured to display, on the basis of image data included in menu data of one item a selection input of which has been received by the selection receiving section (101), the menu data of one item being among the menu data of the respective items captured by the capturing section, a three-dimensional image of the one item the selection input of which has been received, on the display (17);
a set instruction receiving section (104) configured to receive a display instruction of a set menu; and
a set display control section (110) configured to display, when the set instruction receiving section (104) receives a display instruction of a set menu for a single menu item a selection input of which has been received by the selection receiving section (101), a three-dimensional image and a price of the set menu item including the single menu item the selection input of which has been received, on the display (17).

2. The electronic menu apparatus according to claim 1, **characterized in that**
each of the three-dimensional image of the single menu item, and three-dimensional image of the set menu item which are displayed on the display (17) has a size substantially identical to the size of the actual item at least in the two-dimensional direction.

3. The electronic menu apparatus according to claim 1 **characterized by** further comprising:
a first order receiving section (102) configured to receive an order of a single menu item a three-dimensional image of which is displayed on the display (17) by the image display control section;
a second order receiving section (103) configured to receive an order of a set menu item a three-dimensional image of which is displayed on the display (17) by the set display control section;
an order information storage section (31) configured to store information on the single menu item or set menu item the order of which has been received by the first or second order receiving section; and
a communication section (14) configured to transmit information on the single menu item or set menu item stored in the order information storage section (31) to an external apparatus.
